# EUROPEAN PATENT APPLICATION

(11) **EP 1 881 351 A1**
(43) Date of publication of application: **23.01.2008**
(21) Application number: 07739050.8
(22) Date of filing: 20.03.2007
(51) Int. Cl.: G02B 5/30, G02F 1/1335

(54) **METHOD FOR PRODUCTION OF POLARIZING FILM, AND LIQUID CRYSTAL DISPLAY ELEMENT**

(30) Priority: 27.04.2006 JP 2006124244
(71) Applicant: Nitto Denko Corporation, Ibaraki-shi, Osaka 567-8680 (JP)
(72) Inventor: IWAKAWA, Yasuko, NITTO DENKO CORPORATION, Osaka, 5678680 (JP); NAKANO, Shuusaku, NITTO DENKO CORPORATION, Osaka, 5678680 (JP); INOUE, Tetsuo, NITTO DENKO CORPORATION, Osaka, 5678680 (JP); MATSUDA, Shouichi, NITTO DENKO CORPORATION, Osaka, 5678680 (JP)
(74) Representative: Grünecker, Kinkeldey, Stockmair & Schwanhäusser Anwaltssozietät
(86) International application number: PCT/JP2007/055607
(87) International publication number: WO 2007/125696

(57) **Abstract**

A method for producing a polarizing film of the present invention comprises a step (1) of preparing a lyotropic liquid crystalline solution having electric conductivity of not more than 50 µS/cm (expressed in terms of 0.05% by weight) and containing a dichroic dye and a solvent, a step (2) of preparing a base material having at least one surface subjected to a hydrophilization treatment, and a step (3) of coating the solution prepared in the step (1) on the hydrophilized surface of the base material prepared in the step (2) at a coating rate of not less than 100 mm/second, and drying the solution. The method of the present invention can easily produce a polarizing film having a high dichroic ratio.

## Description

### BACKGROUND OF THE INVENTION

### Field of the Invention

The present invention relates to a method for producing a polarizing film having a high dichroic ratio, and a liquid crystal display device containing the polarizing film.

### Description of the Related Art

A polarizing film used for a liquid crystal display device and the like has been conventionally produced by drawing a polymer film mainly containing a polyvinyl alcohol-based resin dyed with iodine. However, since the polarizing film is produced by a drawing method, the polarizing film is easily torn in the drawing direction. Further, when the polarizing film is used for a liquid crystal display device, the size of the polarizing film largely varies according to a variation of temperature or humidity, and thus there are various problems that a contrast ratio decreases and display unevenness occurs.
In order to solve these problems, a method of producing a polarizing film by coating a lyotropic liquid crystalline solution containing a dichroic dye to a base material and orientating the dichroic dye is disclosed (for example, refer to Japanese Unexamined Patent Publication No. 2005-154746).
However, there is a problem that the polarizing film cannot obtain a high dichroic ratio. A method of improving a dichroic ratio has not conventionally been known.

### SUMMARY OF THE INVENTION

An object of the present invention is to provide a method for producing a polarizing film having a high dichroic ratio, and to provide a liquid crystal display device comprising a polarizing film made by the method.

In order to realize the above object, the present inventors have intensively studied and found that the object is attained by the following method for producing a polarizing film, and thus the present invention has been completed.

A method for producing a polarizing film of the present invention is comprising the following steps (1) to (3):
(1) a step of preparing a lyotropic liquid crystalline solution having electric conductivity of not more than 50 µS/cm (expressed in terms of 0.05% by weight) and containing a dichroic dye and a solvent;
(2) a step of preparing a base material having at least one surface subjected to a hydrophilization treatment; and
(3) a step of coating the solution prepared in the step (1) on a hydrophilized surface of the base material prepared in the step (2) at a coating rate of not less than 100 mm/second, and drying the solution.

In a preferred embodiment, the step (1) includes a treatment of decreasing sulfuric acid ions from the solution.

In a preferred embodiment, the dichroic dye is either an organic compound having a sulfone group, a carboxyl group or an amino group, or a salt thereof.

In a preferred embodiment, the solvent is water.

In a preferred embodiment, electric conductivity of the water is not more than 20 µS/cm.

In a preferred embodiment, a concentration of the solution is from 5% by weight to 40% by weight.

In a preferred embodiment, the hydrophilization treatment is a treatment of reducing a contact angle of water to the base material by not less than 10% at 23°C comparing with that before the treatment.

In a preferred embodiment, the hydrophilization treatment is a treatment of adjusting a contact angle of water to the base material within a range from 5° to 60° at 23°C.

In a preferred embodiment, the hydrophilization treatment is a corona treatment, a plasma treatment, an alkali treatment, or an anchor coat treatment.

In a preferred embodiment, the base material is a glass base material or a polymer film.

In a preferred embodiment, the polymer film contains a cellulose-based resin.

A liquid crystal display device of the present invention comprises a polarizing film made by any one of the above methods.

According to a method for producing a polarizing film of the present invention, a polarizing film having a remarkably higher dichroic ratio than a polarizing film made by a conventional method for producing a polarizing film can be made due to a synergistic action obtained by combining the steps.

### DETAILED DESCRIPTION OF THE PREFERRED EMBODIMENTS

### [A. Summary of the Invention]

A method for producing a polarizing film of the present invention is comprising the following steps (1) to (3):
(1) a step of preparing a lyotropic liquid crystalline solution having electric conductivity of not more than 50 µS/cm (expressed in terms of 0.05% by weight) and containing a dichroic dye and a solvent;
(2) a step of preparing a base material having at least one surface subjected to a hydrophilization treatment; and
(3) a step of coating the solution prepared in the step (1) on a hydrophilized surface of the base material prepared in the step (2) at a coating rate of not less than 100 mm/second, and drying the solution.

A polarizing film made by the method can have a remarkably higher dichroic ratio and more excellent polarization property than a polarizing film produced by a conventional method. In the method of the present invention, a dichroic ratio of a polarizing film at a wavelength of 600 nm is preferably 25 or more, more preferably 28 or more, and particularly preferably 30 or more. When a polarizing film having a dichroic ratio within the above range is used for, for example, a liquid crystal display device, a high contrast ratio can be obtained. Further, since it is not necessary to use a drawing operation during a production step, the size of a polarizing film is hardly varied. As a result of this, a liquid crystal display device in which a contrast ratio hardly decreases and display unevenness hardly occurs can be obtained.

### [B. Step (1)]

The step (1) of the present invention is a step of preparing a lyotropic liquid crystalline solution, which has electric conductivity of not more than 50 µS/cm (expressed in terms of 0.05% by weight) and contains a dichroic dye and a solvent.

As used herein, "electric conductivity" indicates how easily a material conducts electricity, and refers to conductivity of a material between facing electrodes having a cross sectional area of 1 cm² and an interval of 1 cm. When the value of the conductivity is lower, a liquid more hardly conducts electricity. "Expressed in terms of 0.05% by weight" indicates electric conductivity in a case that a concentration of a solution used in the present invention is 0.05% by weight. Electric conductivity expressed in terms of 0.05% by weight is, for example, the value of 1/20 of electric conductivity of a liquid having a concentration of 1% by weight, and the value of 1/10 of electric conductivity of a solution having a concentration of 0.5% by weight.

The electric conductivity (expressed in terms of 0.05% by weight) of a solution used in the present invention is preferably 50 µS/cm or less, more preferably 40 µS/cm or less, particularly preferably 30 µS/cm or less, and particularly preferably 20 µS/cm or less. A minimum value of the electric conductivity is 0.1 µS/cm as a realizable value. When the steps (2) and (3) are combined, a polarizing film having a high dichroic ratio can be produced using a solution having electric conductivity within the above range.

A method of reducing the electric conductivity of a solution is, for example, a method using a reverse osmosis membrane. The reverse osmosis membrane is to separate an original liquid (a solution) into a concentrated liquid containing a dichroic dye and a penetration liquid containing monovalent, divalent or higher ions. An average pore diameter in the reverse osmosis membrane is preferably from 2 × 10⁻⁸ cm to 20 × 10⁻⁸ cm, and more preferably from 5 × 10⁻⁸ cm to 10 × 10⁻⁸ cm. A material of forming the reverse osmosis membrane is, for example, a polyamide based resin, a polyesteramide based resin, a polypiperazineamide based resin, or a material obtained by crosslinking a water-soluble vinyl polymer.

For example, a structure of the reverse osmosis membrane is an asymmetric membrane having a dense layer on at least one surface thereof and a fine pore which is gradually larger going from the dense layer to the inside of the membrane or another surface, or a composite membrane having a thin separation-functional layer, a material of which is different from the dense layer, formed on the dense layer of the asymmetric membrane. For example, the reverse osmosis membrane can be used with an arbitrary form such as a form of a hollow fiber membrane or a form of a flat membrane.

The step (1) preferably includes a treatment of decreasing sulfuric acid ions from the solution. The treatment of decreasing the sulfuric acid ion from the solution is preferably carried out using a reverse osmosis membrane. More particularly, an aqueous solution containing the sulfuric acid ion is penetrated through a reverse osmosis membrane by a pressure which is an osmosis pressure or more, so as to obtain an aqueous solution in which sulfuric acid ions decreases.

A solution used in the present invention includes a dichroic dye and a solvent, and has lyotropic liquid crystalline property. As used herein, "lyotropic liquid crystalline property" indicates a property to generate phase transition between a liquid crystal phase and an isotropic phase by changing a temperature or a concentration of the dichroic dye (a solute). The liquid crystal phase is not especially limited, and can be a nematic liquid crystal phase, a smectic liquid crystal phase, or a cholesteric liquid crystal phase. In addition, the liquid crystal phases can be confirmed and identified with an optical pattern of a liquid crystal phase observed by a polarization microscope. The solution can orientate the dichroic dye by having lyotropic liquid crystalline property.

A dichroic dye used in the present invention is an organic compound to absorb one of a light having a wavelength of 400 nm to 780 nm. As used herein, "dichroic dye" indicates a dye in which a transition moment of a dye molecule in a long-axis direction is larger than that in a short-axis direction or a transition moment of a dye molecule in a short-axis direction is larger than that in a long-axis direction. The dichroic dye can be arbitrarily properly selected according to an object, but is preferably an organic compound having lyotropic liquid crystalline property in the solution state (that is, a lyotropic liquid crystal). More particularly, a dichroic dye having a nematic liquid crystal phase in a solution state at room temperature is preferable because of being excellent in orientation property.

According to the classification by a chemical constitution, the dichroic dye is, for example, an azo based dye, an anthraquinone based dye, a perylene based dye, an indanthrone based dye, an imidazole based dye, an indigoide based dye, an oxazine based dye, a phthalocyanine based dye, a triphenylmethane based dye, a pyrazolone based dye, a stilbene based dye, diphenylmethane based dye, a naphthoquinone based dye, a methocyanine based dye, a quinophthalone based dye, a xanthene based dye, an alizarin based dye, an acridine based dye, a quinoneimine based dye, a thiazole based dye, a methine based dye, a nitro based dye, or a nitroso based dye. Among these dyes, an azo based dye, an anthraquinone based dye, a perylene based dye, an indanthrone based dye, and an imidazole based dye are preferable. These dichroic dyes can be used alone or in combination of two or more thereof. In the present invention, in order to obtain a black polarizing film, plural dichroic dyes having different absorption spectrums are preferably used in combination.

The dichroic dye is preferably either an organic compound having a sulfone group (-SO₃H), a carboxyl group (-COOH) or an amino group (-NH₂, -NHR, -NR₂), or a salt thereof (wherein R represents an arbitrary substituent), and particularly preferably either an organic compounds having a sulfone group or a salt thereof. Introducing a sulfone group into the dichroic dye is effective in order to improve water solubility. When the number of a sulfone group introduced into a dichroic dye increases, water solubility is more improved. The number of the sulfone group is properly selected so as to be compatible solubility to a solvent and water resistance after forming a polarizing film each other.

The dichroic dye is, for example, preferably a dichroic dye having lyotropic liquid crystalline property represented by the following general formula (1).

Formula (1): (Chromogen) (SO₃M)ₙ (wherein M represents a cation)

In the formula (1), M is preferably a hydrogen ion, an ion of metal of group I such as Li, Na, K or Cs, or an ammonium ion.
Further, a chromogen moiety preferably includes an azo derivative unit, an anthraquinone derivative unit, a perylene derivative unit, an indanthrone derivative unit, and/or an imidazole derivative unit.

As for the dichroic dye represented by the general formula (1), the chromogen, such as an azo compound and polycyclic compound structure, becomes a hydrophobic moiety in the solution, and sulfonic acid and a salt of sulfonic acid become a hydrophilic moiety in the solution. With the balance of the hydrophobic and hydrophilic moieties, the hydrophobic moieties and the hydrophilic moieties are respectively combined to develop a lyotropic liquid crystal phase.

A particular example of the dichroic dye represented by the general formula (1) is compounds represented by the following general formulas (2) to (8).

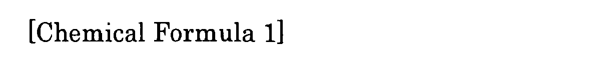

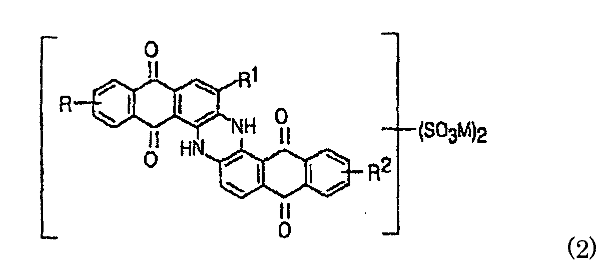

Wherein R¹ represents hydrogen or chlorine, R² represents hydrogen, an alkyl group, ArNH or ArCONH. The alkyl group has preferably a carbon number of 1 to 4, and a methyl group or an ethyl group is more preferable. An aryl group (Ar) is preferably a substituted or unsubstituted phenyl group, and a phenyl group which is unsubstituted or substituted with chlorine at the 4-position is more preferable. M is as defined in the general formula (1).

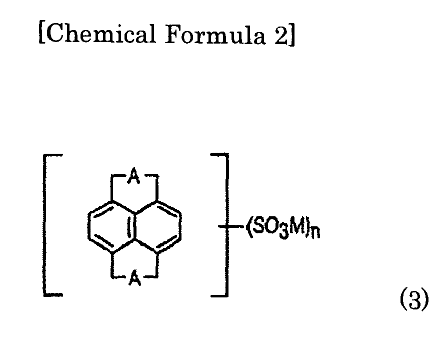

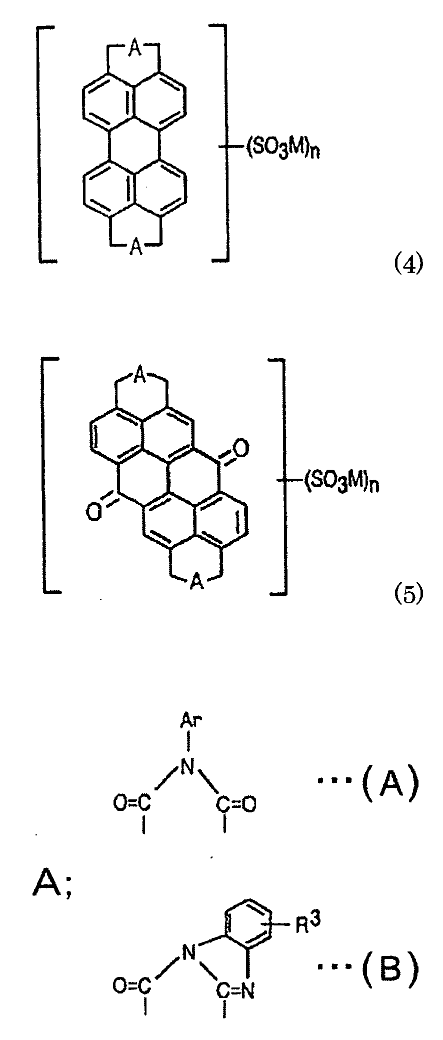

In the formulas (3) to (5), A is represented by the formula (A) or (B), and n is 2 or 3. R³ of A represents hydrogen, an alkyl group, halogen, or an alkoxy group, and Ar represents a substituted or unsubstituted aryl group. The alkyl group preferably has 1 to 4 carbon number, and a methyl group or an ethyl group is more preferable. Halogen is preferably bromine or chlorine. The alkoxy group preferably has 1 or 2 carbon number, and a methoxy group is more preferable. The aryl group is preferably a substituted or unsubstituted phenyl group, and is preferably a phenyl group which is unsubstituted, or substituted with a methoxy group, ethoxy group, chlorine or a butyl group at the 4-position, or substituted with a methyl group at the 3-position. M is as defined in the general formula (1).

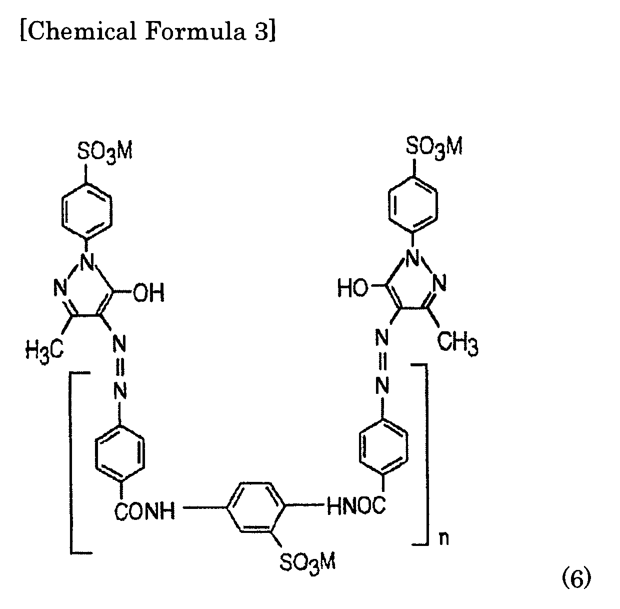

In the formula (6), n is 3 to 5, and M is as defined in the general formula (1).

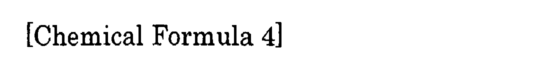

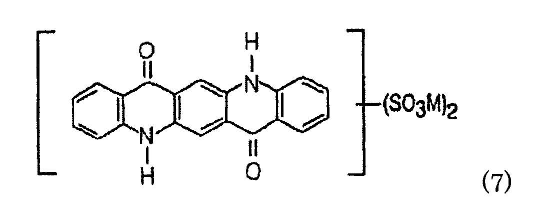

In the formula (7), M is as defined in the general formula (1).

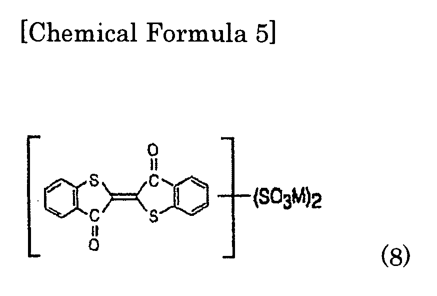

In the formula (8), M is as defined in the general formula (1).

A method of introducing a sulfone group into the above organic compound (sulfonation) is, for example, a method of reacting sulfuric acid, chlorosulfuric acid, or fuming sulfuric acid on the organic compound so as to substitute hydrogen in a core with a sulfone group. Salt of the organic compound is obtained by substituting a hydrogen atom capable of dissociating from an acid with a monovalent cation, e.g., a lithium ion, a sodium ion, a potassium ion, a cesium ion, and an ammonium ion.

In addition to above compounds, as the dichroic dye, following compounds can be used, that is, the compounds disclosed in, for example, Japanese Unexamined Patent Publication No. 2006-047966, Japanese Unexamined Patent Publication No. 2005-255846, Japanese Unexamined Patent Publication No. 2005-154746, Japanese Unexamined Patent Publication No. 2002-090526, Japanese Translation of PCT Publication No. 8-511109, and Japanese Translation of PCT Publication No. 2004-528603.
Further, a commercial dichroic dye can be used, as a dichroic dye used in the present invention. For example, the commercial dichroic dye is C.I. DirectB67, DSCG (INTAL), RU31.156, Metyl orange, AH6556, Sirius Supra Brown RLL, Benzopurpurin, Copper-tetracarboxyphthalocyanine, Acid Red 266, Cyanine Dye, Violet 20, Perylenebiscarboximides, Benzopurpurin 4B, Methyleneblue (Basic Blue 9), Brilliant Yellow, Acid Red 18, or Acid Red 27.

A solvent used in the present invention is used to dissolve the dichroic dye so as to develop a lyotropic liquid crystalline property. Any suitable solvent can be selected. For example, the solvent can be an inorganic solvent such as water, or an organic solvent such as alcohols, ketones, ethers, esters, aliphatic and aromatic hydrocarbons, halogenated hydrocarbons, amides, or cellosolves. The solvent is, for example, n-butanol, 2-butanol, cyclohexanol, isopropyl alcohol, t-butyl alcohol, glycerol, ethylene glycol, acetone, methyl ethyl ketone, methyl isobutyl ketone, cyclohexanone, cyclopentanone, 2-pentanone, 2-hexanone, diethyl ether, tetrahydrofuran, dioxane, anisole, ethyl acetate, butyl acetate, methyl lactate, n-hexane, benzene, toluene, xylene, chloroform, dichloromethane, dichloroethane, dimethyl formamide, dimethylacetamide, methyl cellosolve, or ethyl cellosolve. These solvents can be used alone or in combination of two or more thereof.

The particularly preferable solvent is water. Electric conductivity of the water is preferably 20 µS/cm or less, more preferably from 0.001 µS/cm to 10 µS/cm, and particularly preferably from 0.001 µS/cm to 5 µS/cm. The minimum value of the electric conductivity of the water is 0 µS/cm. When the electric conductivity of the water is within an above range, a polarizing film having high dichroic ratio can be obtained.

A concentration of the solution can be properly adjusted within the range to have lyotropic liquid crystalline property depending on kinds of a dichroic dye to be used. The concentration of a dichroic dye of the solution is preferably from 5% by weight to 40% by weight, more preferably from 5% by weight to 35% by weight, and particularly preferably from 5% by weight to 30% by weight. When the concentration of the solution is within the above range, the solution can be a stable liquid crystalline state.

The solution can contain any suitable additive. For example, the additive is a surfactant, a plasticizer, a heat stabilizer, a light stabilizer, a slipping agent, an antioxidant, an ultraviolet absorber, a flame retardant, a colorant, an antistatic agent, a compatibilizing agent, a crosslinking agent, or a thickener. An additional amount of the additive is preferable more than 0 to 10 parts by weight or less based on 100 parts by weight of a solution.

The solution can further contain a surfactant. The surfactant is used to improve wettability and coating property of a dichroic dye to the surface of a base material. The surfactant is preferably a nonionic surfactant. An amount of the surfactant added is preferable more than 0 and 5 parts by weight or less based on 100 parts by weight of a solution.

### [C. Step (2)]

The step (2) of the present invention is a step of preparing a base material having at least one surface subjected to a hydrophilization treatment. As used herein, "hydrophilization treatment" is a treatment of reducing a contact angle of water to the base material. The hydrophilization treatment is used to improve wettability and coating property of a surface of the base material coated with a dichroic dye.

The hydrophilization treatment is a treatment of reducing a contact angle of water to a base material at 23°C by preferably 10% or more, more preferably 15% to 80%, and particularly preferably 25% to 80% comparing with the contact angle before the treatment. In addition, a ratio to reduce the contact angle (%) can be measured by a formula: {(Contact angle before treatment - Contact angle after treatment) /Contact angle before treatment} × 100.

Further, the hydrophilization treatment is a treatment of reducing a contact angle of water to a base material at 23°C by preferably 5° or more, more preferably 10° to 65°, and particularly preferably 20° to 60°, comparing with the contact angle before the treatment.

Furthermore, the hydrophilization treatment is a treatment of adjusting a contact angle of water to a base material at 23°C within a range from preferably 5° to 60°, more preferably 5° to 50°, and particularly preferably 5° to 45°. When the contact angle of water of a base material is within the above range, a polarizing film having a high dichroic ratio and low thickness unevenness can be obtained.

The hydrophilization treatment can be any suitable method. For example, the hydrophilization treatment can be a dry treatment or a wet treatment. The dry treatment is, for example, a discharge treatment, e.g., a corona treatment, a plasma treatment, or a glow discharge treatment; a flame treatment; an ozone treatment; an UV ozone treatment; and an ionization active ray treatment, e.g., an ultraviolet treatment or an election beam treatment. The wet treatment is, for example, an ultrasonic treatment using a solvent such as water or acetone, an alkali treatment, or an anchor coat treatment. These treatments can be used alone or in combination of two or more thereof.

Preferably, the hydrophilization treatment is a corona treatment, a plasma treatment, an alkali treatment, or an anchor coat treatment. By the hydrophilization treatment, a polarizing film having a high dichroic ratio and low thickness unevenness can be made. The conditions of the hydrophilization treatment, e.g., a treatment time or a strength, can be properly adjusted so as to a contact angle of water of a base material to be within the above range.

The typical corona treatment is a treatment of modifying a surface of a base material by passing through the base material in a corona discharge. The corona discharge occurs by applying high frequency and high voltage to a space between a grounded dielectric roll and an insulated electrode, breaking the insulation of an air between electrodes, and ionizing the air. The typical plasma treatment is to modify a surface of a base material by passing through the base material in a low temperature plasma. The low temperature plasma occurs by generating a glow discharge in an inorganic gas such as a low pressure inert gas, oxygen or halogen gas, and ionizing a part of a gas molecule. The typical ultrasonic cleaning treatment is a treatment of improving wettability of a base material by dipping a base material in water or an organic solvent, applying ultrasonic to the base material, and removing contaminants on a surface of the base material. The typical alkali treatment is a treatment of modifying a surface of a base material by dipping the base material in an alkali treatment solution prepared by dissolving a basic material in water or an organic solvent. The typical anchor coat treatment is to coat an anchor coat agent on a surface of a basic material.

A base material used in the present invention is used in order to uniformly coat a solution containing the dichroic dye and the solvent. The base material can be arbitrarily properly selected. For example, the base material is a glass base material, a quartz base material, a polymer film, a plastic base material, a metal plate such as aluminum or iron, a ceramic base material, or a silicone wafer. The base material is preferably a glass base material or a polymer film.

The glass base material can be arbitrarily properly selected. The glass base material is preferably a base material used for a liquid crystal cell and, for example, is a soda-lime glass (blue plate) containing an alkali component, or a low alkali borate glass. As the glass base material, a commercial glass base material can be used as it is. The commercial glass base material is, for example, a glass code: 1737 manufactured by CORNING Corporation, a glass code: AN635 manufactured by Asahi glass Co., Ltd., or a glass code:NA-35 manufactured by NH TECHNO GLASS Corporation.

A resin for forming the polymer film can be arbitrarily properly selected. Preferably, the polymer film includes a thermoplastic resin. The thermoplastic resin is a polyolefin resin, a cycloolefin based resin, a polyvinyl chloride based resin, a cellulose-based resin, a styrene based resin, polymethyl methacrylate, polyvinyl acetate, a polyvinylidene chloride based resin, a polyamide based resin, a polyacetal based resin, a polycarbonate based resin, a polybutylene terephthalate based resin, a polyethylene terephthalate based resin, a polysulfone based resin, a polyether sulfone based resin, a polyether ether ketone based resin, a polyarylate based resin, a polyamide imide based resin, or a polyimide based resin. The thermoplastic resin can be independently or by mixing two or more resins. Further, the thermostatic resin can be used after subjected to any suitable polymer modification. The polymer modification is, for example, a modification of a copolymerization, a crosslinking, a molecular terminal, or a tacticity.

When a polymer film is used as a base material, it is preferable that the polymer film has excellent light transmittance of visible light and excellent transparency. The light transmittance of the polymer film in visible light is preferably 80% or more, and more preferably 90% or more. In this case, the light transmittance is a Y value at a film thickness of 100 µm, where the Y value is obtained by correcting visibility based on spectrum data measured by a spectrophotometer (trade name: U-4100 type, manufactured by Hitachi, Ltd.,). A Haze value of the polymer film is preferably 3% or less, and more preferably 1% or less. However, in the present invention, the Haze value is a value measured according to JIS-K7105.
When a polymer film is used as a base material, the base material can be used as a protective film for a polarizing film after forming the polarizing film.

Abase material used in the present invention is preferably a polymer film containing a cellulose-based resin. The reason of using the polymer film is that a polarizing film having excellent wettability of a dichroic dye, a high dichroic ratio, and low thickness unevenness can be made.

The cellulose-based resin can be arbitrarily properly selected. The cellulose-based resin is preferably a cellulose organic acid ester or a cellulose mixed organic acid ester, in which a part or the whole of a hydroxyl group of cellulose is substituted with a acetyl group, a propionyl group, and/or a butyl group. The cellulose organic acid ester is, for example, cellulose acetate, cellulose propionate, or cellulose butylate. The cellulose mixed organic acid ester is, for example, cellulose acetate propionate or cellulose acetate butylate. For example, the cellulose-based resin can be made by the method described in [0040] to [0041] in Japanese Unexamined Patent Publication No. 2001-188128.

As a base material used in the present invention, a commercial polymer film can be used as it is. Further, a commercial polymer film subjected to secondary processing, such as a drawing treatment and/or a shrinkage treatment, can be also used. A commercial polymer film containing a cellulose-based resin is, for example, FUJI-TACK series (trade name: ZRF80S, TD80UF, TDY-80UL) manufactured by FUJIFILM Corporation, or trade name of "KC8UX2M" manufactured by KONICA MINOLTA OPTO, INC.

The thickness of the base material is preferably from 20 µm to 100 µm. When the thickness of a base material is within the above range, handling property and coating property of the base material can be excellent.

In addition, the processing order of the steps (1) and (2) is not especially limited. The step (2) can be carried out after carrying out the step (1), the step (1) can be carried out after carrying out the step (2), or the steps (1) and (2) can be simultaneously carried out.

### [D. Step (3)]

The step (3) of the present invention is a step of coating the solution prepared in the step (1) on a hydrophilized surface of the base material prepared in the step (2) at a coating rate of not less than 100 mm/second, and drying the solution. The coating rate is not less than 100 mm/second, more preferably from 500 mm/second to 8000 mm/second, particularly preferably from 800 mm/second to 6000 mm/second, and particularly preferably from 1000 mm/second to 4000 mm/second. In a general production method of an optical film by a solvent casting method, a coating rate is preferably slow in order to improve uniformity of a coating layer. By carrying out coating at a coating rate specified in the present invention, a polarizing film having a high dichroic ratio and low thickness unevenness was made, and this result was unexpected excellent effect. According to a supposition by present inventors, the reason of making a polarizing film having a high dichroic ratio and low thickness unevenness seems to be that a proper shearing force to orientate a dichroic dye in a solution is provided for the dichroic dye in such the coating rate.

As a method of coating the solution on a surface of a base material, a coating method using a proper coater is properly used. The coater is, for example, a reverse roll coater, a positive rotation roll coater, a gravure coater, a knife coater, a rod coater, a slot die coater, a slot orifice coater, a curtain coater, a fountain coater, an air doctor coater, a kiss coater, a dip coater, a bead coater, a blade coater, a cast coater, a spray coater, a spin coater, a extrusion coater, or a hot melt coater. The coater is preferably a reverse roll coater, a positive rotation coater, a gravure coater, a rod coater, a slot die coater, a slot orifice coater, a curtain coater, and a fountain coater. By a coating method using the above coater, a polarizing film having low thickness unevenness can be made.

A method of drying the solution can be arbitrarily properly selected. A drying method is, for example, a method using a drying means, e.g., an air circulation type constant temperature oven in which a hot or cold air is circulated, a heater using a microwave or far-infrared rays, or a roll, a heat pipe roll or a metal belt heated for adjusting a temperature.

A temperature at which the solution is dried is an isotropic phase translation temperature of the solution or lower, and the temperature preferably gradually increases from a low temperature to a high temperature to dry the solution. The drying temperature is preferably from 10°C to 80°C, and more preferably from 20°C to 60°C. When the temperature is within the above range, a polarizing film having low thickness unevenness can be made.

Time required to dry the solution can be arbitrarily selected depending on a drying temperature or a kind of a solvent. However, in order to make a polarizing film having low thickness unevenness, the time is, for example, from 1 to 60 minutes, and preferably from 5 to 40 minutes.

### [E. Other step]

A method for producing a polarizing film of the present invention comprises preferably a step (4) after the steps (1) to (3), and the step (4) is contacting a solution containing a compound salt to the coating layer in the step (3). The compound salt is at least one kind selected from the group consisting of an aluminum salt, a barium salt, a lead salt, a chromium salt, a strontium salt, and a compound salt having two or more amino groups in the molecule.

In the present invention, the step (4) is to make the polarizing film to be made insoluble or hardly soluble to water. The compound salt is, for example, aluminum chloride, barium chloride, lead chloride, chromium chloride, strontium chloride, 4,4'-tetramethyldiaminodiphenylmethane hydrochloride, 2,2'-dipyridyl hydrochloride, 4,4'-dipyridyl hydrochloride, melamine hydrochloride, or tetraaminopyrimidine hydrochloride. By using the compound salt, a polarizing film having excellent water resistance can be made.

A concentration of a compound salt of a solution containing the compound salt is preferably from 3% by weight to 40% by weight, and particularly preferably from 5% by weight to 30% by weight. When a polarizing film is contacted with a solution containing a compound salt having a concentration within the above range, the polarizing film can have excellent durability.

A method of contacting the coating layer made in the step (3) to a solution containing the compound salt is arbitrarily selected. The method is, for example, a method of coating a solution containing the compound salt on a surface of the coating layer, or a method of dipping the coating layer in a solution containing the compound salt. When these methods are used, a made coating layer is preferably washed with water or an arbitrary solvent, and further dried. After these steps, a polarizing element having excellent adhesion of an interface between a base material and a polarizing film can be obtained.

### [G. Form and Application of Polarizing Film]

A polarizing film made by the method of the present invention can be used for an arbitrarily properly application. Preferably, a polarizing film can be incorporated into a liquid crystal display device as an optical member. The polarizing film can be used in an arbitrary form. The form of the polarizing film can be, for example, an independent polarizing film, or a laminate containing a base material and a polarizing film. Further, the form can be a form in which the polarizing film is sandwiched between two base materials through an arbitrary adhesion layer. Further, the form can be a form of a polarizing plate in which a retardation film is laminated on a polarizing film or a laminate of a base material and a polarizing film. Furthermore, the polarizing film can include an adhesion layer on at least one side thereof.

As used herein, "adhesion layer" is to contact surfaces of adjacent materials so as to integrate those by practically sufficient adhesive strength and adhesion time. A material of forming the adhesion layer is, for example, an adhesive or an anchor coat agent. The adhesion layer can have a multilayer structure in which an anchor coat layer is formed on a surface of a body to be adhered and an adhesive layer is formed on it. Further, the adhesion layer can be a thin layer (also referred to as a hair line) which cannot be visually confirmed.

As a material to from the adhesion layer, a proper adhesive or anchor coat agent can be properly selected depending on the purpose or the type of the body to be adhered. According to a classification of a form, a particular example of the adhesive is a solvent type adhesive, an emulsion type adhesive, a pressure-sensitive adhesive, a rewetting adhesive, a polycondensation type adhesive, a solventless type adhesive, a film state adhesive, or a hot melt type adhesive. According to a classification of a chemical structure, the adhesive is a synthetic resin adhesive, a rubber adhesive, or a natural material adhesive. The adhesive includes a viscoelastic material (also referred to as a tackiness agent) having adhesion strength capable of sensing by press-contacting at an ordinary temperature.

An application of the liquid crystal display device comprising the polarizing film of the present invention is, for example, OA appliance such as personal computer monitors, notebook personal computers, and copying machines, portable appliance such as portable phones, watches, digital cameras, portable information terminals (PDA), and portable game machines, electric appliance for home use such as video cameras, television sets, and electronic ranges, appliance for mounting on a vehicle such as back monitors, monitors for a car navigation system, and car audio apparatus, display appliance such as monitors for information for commercial stores, safeguard appliance such as supervising monitors, assisting or medical appliance such as monitors for assisting and caring seniors and monitors for medical use, and the like.

### [Examples]

The present invention will be described below by way of Examples and Comparative Examples. However, the present invention is not limited to these examples. Each analyzing method used in these examples is as follows.

### (1) Method for measuring electric conductivity

After washing an electrode of solution conductivity measuring device (trade name of "CM-117" manufactured by Kyoto Electronics Manufacturing Co., Ltd.) with an aqueous solution prepared to have a concentration of a dichroic dye of 0.05% by weight, a sample was filled in a container being 1 cm³ and connected with the electrode. Then, when a displayed value of electric conductivity indicates a constant value, the value was made to be a measuring value.

### (2) Method for measuring dichroic ratio (DR)

Transmittances k₁ and k₂ with respect to each linearly polarized light were measured using a spectrophotometer having an integrating sphere (trade name of "U-4100" manufactured by Hitachi, Ltd.,), where completely polarized light obtained from a Glan-thompson prism polarizer was 100%. A simple substance transmittance (Ts) was calculated by the formula: Ts = (k₁ + k₂)/2. A dichroic ratio (DR) was calculated by the formula: DR = log (1/k₂)/log (1/k₁). In the formulas, k₁ represents transmittance of linear polarized light in the maximum transmittance direction, and k₂ represents transmittance of linear polarized light in the direction rectangular crossing the maximum transmittance direction.

### (3) Measuring method of a contact angle of water

A contact angle was measured using a solid liquid interface analyzer (trade name of "Drop Master300" manufactured by Kyowa Interface Science Co., Ltd.) after 5 seconds from dropping a liquid to a base material. A measuring condition was a static contact angle measuring. Water was ultrapure water and a dropping amount of the water was 0.5 µl. Each base material is repeatedly subjected to this step 10 times, and an average value was made to be a measuring value.

### (4) Method for measuring unevenness of simple substance transmittance

As for the unevenness of a simple substance transmittance, values of k₁and k₂ of arbitrary ten portions of a sample (the size of 5 cm x5 cm) were measured using a double refraction retardation measuring device (trade name of "RETS-1200RF" manufactured by Otsuka Electronics Co., Ltd.) so as to obtain a standard deviation of a simple substance transmittance (Ts). The simple substance transmittance (Ts) was calculated by the formula: Ts = (k₁ + k₂)/2. In the formulas, k₁ represents transmittance of linear polarized light in the maximum transmittance direction, and k₂ represents transmittance of linear polarized light in the direction rectangular crossing the maximum transmittance direction.

### (5) Method for measuring coating rate

A time of passing a bar coater through a specified distance is analyzed using a high speed camera (the type of "FASTCAM-APX RS 250K" manufactured by Photron limited Corporation) so as to measure a coating rate.

### [Example 1]

An aqueous solution containing a dichroic dye (trade name of "LC POLARIZER NO15 manufactured by OPTIVA Corporation) and pure water (electric conductivity: 1.7 µS/cm) was prepared so as to be a concentration of the dichroic dye of 0.25% by weight. The dichroic dye is lyotropic liquid crystal and the dichroic dye includes a sulfone group. Then, the solution was refined using a triple flat membrane evaluation device having a reverse osmosis membrane filter (trade name of "NTR-7430" manufactured by NITTO DENKO Corporation) so as to have electric conductivity of the aqueous solution of 20.1 µS/cm (expressed in terms of 0.05% by weight). Next, the aqueous solution containing the dichroic dye was prepared using a rotary evaporator so as to be a concentration of the dichroic dye of 12.2% by weight. When the prepared aqueous solution was observed by a polarization microscope, the solution showed a nematic liquid crystal phase at 23°C.

Then, a polymer film (trade name of "ZRF80S" manufactured by FUJIFILM Corporation) mainly containing triacetyl cellulose having a thickness of 80 µm was dipped in an aqueous solution dissolved with sodium hydroxide, and a surface of the polymer film was subjected to an alkali treatment (also referred to as a saponification treatment). A contact angle of water of the polymer film was 64.6° at 23°C before the treatment, and was 42.2° after the treatment. Next, the surface of the polymer film subjected to the alkali treatment was coated with the lyotropic liquid crystalline aqueous solution containing the dichroic dye using a bar coater at the coating rate of 1600 mm/second (the wet thickness of 1µm), and naturally dried so as to produce a laminate A comprising a polarizing film and a polymer film and having a simple substance transmittance of 42.12%. The evaluated results of the laminate A are shown in Table 1.

### [Example 2]

An aqueous solution containing a dichroic dye, a concentration of which is 12.5% by weight, and having electric conductivity of 20.1 µS/cm (expressed in terms of 0.05% by weight) was prepared by a similar method to that of Example 1. Then, a surface of a glass base material (the glass code of "1737" manufactured by CORNING Corporation) having a thickness of 0.7 µm was washed with acetone for 3 minutes and ion exchanged water for 5 minutes by an ultrasonic treatment. At this time, a contact angle of water of the glass base material was 43.9° at 23°C before the treatment, and was 30.1° after the treatment. Then, the surface of the glass base material subjected to the ultrasonic treatment was subjected to a corona treatment (the power: 0.14 kW). A contact angle of water of the glass base material was 30.1° at 23°C before the treatment, and was 14.2° after the treatment. Next, the surface of the glass base material subjected to the corona treatment was coated with the lyotropic liquid crystalline aqueous solution containing the dichroic dye using a bar coater at the coating rate of 1600 mm/second (the wet thickness of 1 µm), and naturally dried so as to produce a laminate B comprising a polarizing film and a glass base material and having a simple substance transmittance of 50.20%. The evaluated results of the laminate B are shown in Table 1.

### [Example 3]

An aqueous solution containing a dichroic dye, a concentration of which is 13.0% by weight, and having electric conductivity of 20.1 µS/cm (expressed in terms of 0.05% by weight) was prepared by a similar method to that of Example 1. Then, a polymer film (trade name of "ZRF80S" manufactured by FUJIFILM Corporation) mainly containing triacetyl cellulose having a thickness of 80 µm was subjected to an alkali treatment by a similar method to that of Example 1. Next, a surface of the polymer film subjected to the alkali treatment was coated with the lyotropic liquid crystalline aqueous solution containing the dichroic dye using a bar coater at the coating rate of 1200 mm/second (the wet thickness of 1 µm), and naturally dried so as to produce a laminate C comprising a polarizing film and a polymer film and having a simple substance transmittance of 41.95%. The evaluated results of the laminate C are shown in Table 1.

### [Comparative Example 1]

A laminate H was produced by a similar method to that of Example 1 except that an aqueous solution containing a dichroic dye is prepared without refining so that a concentration of the dichroic dye became 13.0% by weight. Electric conductivity of the aqueous solution was 159.2 µS/cm (expressed in terms of 0.05% by weight). The evaluated results of the laminate H are shown in Table 1.

### [Comparative Example 2]

A laminate I was produced by a similar method to that of Example 1 except that a polymer film mainly containing triacetyl cellulose was not subjected to an alkali treatment. A contact angle of water of the polymer film was 64.6°. The evaluated results of the laminate I are shown in Table 1.

### [Comparative Example 3]

A laminate J was produced by a similar method to that of Example 1 except that a coating rate was 50 mm/second. The evaluated results of the laminate J are shown in Table 1.

**[Table 1]**

| | Dichroic Ratio (Wavelength: 600 nm) | Simple Substance Transmittance (%) | Standard Deviation of Simple Substance Transmittance |
|---|---|---|---|
| Example 1 | 35.3 | 42.12 | 0.33 |
| Example 2 | 34.5 | 50.20 | 0.50 |
| Example 3 | 32.1 | 41.95 | 0.52 |
| Comparative Example 1 | 22.8 | 43.09 | 0.38 |
| Comparative Example 2 | 10.4 | 41.87 | 0.41 |
| Comparative Example 3 | 12.3 | 38.36 | 2.90 |

### [Evaluation]

Table 1 shows a dichroic ratio and thickness unevenness of laminates comprising a polarizing film, which were produced in Examples 1 to 3 and Comparative Examples 1 to 3. Clearly from Table 1, laminates containing a polarizing film, which were produced in Examples 1 to 3, had a high dichroic ratio and low standard deviation of a simple substance transmittance. The standard deviation of the simple substance transmittance is related with thickness unevenness. When the value of the standard deviation is lower, the thickness unevenness of a polarizing film is lower. On the other hand, laminates comprising a polarizing film, which are produced in Comparative Examples 1 and 2 had a low dichroic ratio. A polarizing film made in Comparative Example 3 had a low dichroic ratio, and a high standard deviation of a simple substance transmittance.

Accordingly, the method of the present invention can produce a polarizing film having a high dichroic ratio. For example, the polarizing film is remarkably effective to improve display property of a liquid crystal display device.

## Claims

1. A method for producing a polarizing film, comprising the following steps (1) to (3):
(1) a step of preparing a lyotropic liquid crystalline solution having electric conductivity of not more than 50 µS/cm (expressed in terms of 0.05% by weight) and containing a dichroic dye and a solvent;
(2) a step of preparing a base material having at least one surface subjected to a hydrophilization treatment; and
(3) a step of coating the solution prepared in the step (1) on a hydrophilized surface of the base material prepared in the step (2) at a coating rate of not less than 100 mm/second, and drying the solution.

2. The method for producing a polarizing film according to claim 1, wherein the step (1) comprises a treatment of decreasing sulfuric acid ions from the solution.

3. The method for producing a polarizing film according to claim 1 or 2, wherein the dichroic dye is either an organic compound having a sulfone group, a carboxyl group or an amino group, or a salt thereof.

4. The method for producing a polarizing film according to any one of claims 1 to 3, wherein the solvent is water.

5. The method for producing a polarizing film according to claim 4, wherein electric conductivity of the water is not more than 20 µS/cm.

6. The method for producing a polarizing film according to any one of claims 1 to 5, wherein a concentration of the solution is from 5% by weight to 40% by weight.

7. The method for producing a polarizing film according to any one of claims 1 to 6, wherein the hydrophilization treatment is a treatment of reducing a contact angle of water to the base material by not less than 10% at 23°C comparing with that before the treatment.

8. The method for producing a polarizing film according to any one of claims 1 to 7, wherein the hydrophilization treatment is a treatment of adjusting a contact angle of water to the base material within a range from 5° to 60° at 23°C.

9. The method for producing a polarizing film according to any one of claims 1 to 8, wherein the hydrophilization treatment is a corona treatment, a plasma treatment, an alkali treatment, or an anchor coat treatment.

10. The method for producing a polarizing film according to any one of claims 1 to 9, wherein the base material is a glass base material or a polymer film.

11. The method for producing a polarizing film according to claim 10, wherein the polymer film contains a cellulose-based resin.

12. A liquid crystal display device comprising a polarizing film made by the method for producing a polarizing film according to any one of claims 1 to 11.
